Europäisches Patentamt

European Patent Office

Office européen des brevets

(11) Publication number: **0 369 210**
**A1**

## (12) EUROPEAN PATENT APPLICATION

(21) Application number: 89119671.9

(22) Date of filing: 24.10.89

(51) Int. Cl.⁵: **F16J 15/18**

(30) Priority: 17.11.88 US 272191

(43) Date of publication of application:
23.05.90 Bulletin 90/21

(84) Designated Contracting States:
BE ES SE

(71) Applicant: COMBUSTION ENGINEERING, INC.
1000 Prospect Hill Road
Windsor Connecticut 06095(US)

(72) Inventor: Martin, Kenneth Albert
54 Hollow Brook Road
Windsor Connecticut 06095(US)

(74) Representative: Gross, Gernot K.
Kleiberweg 5
D-6200 Wiesbaden(DE)

(54) Seal with packing carrier.

(57) A pressure boundary graphite seal (10) is made up in a gap between a bore (14) and a cylindrical member (16) having a shoulder (22) by use of an annular carrier member (24) of T-shaped cross-section with a "T" leg (26) and a cross (28). The graphite seal rings 30 and 32 are stacked on either side of the leg (26) against the cross (28) which abuts shoulder (22). Reduced preload forces and ease of removal are thus accomplished. Compression of the graphite ring stacks is accomplished by an annular gap traversing flange member (40) with an annular end slot (46) to straddle leg (26) during compression. Removal is enhanced by the slot (50) on carrier (24).

Fig. I

EP 0 369 210 A1

## SEAL WITH PACKING CARRIER

### BACKGROUND OF THE INVENTION

This invention relates to nuclear grade packing rings of graphite which are used throughout the nuclear power generation industry in valves, pumps and miscellaneous applications for sealing various radioactive fluids and gasses. One such type of graphite packing rings are sold under the registered trademark "Grafoil" by the Union Carbide Co. of Danbury, Connecticut.

In the prior art, it is well recognized that these graphite packing rings resist deterioration from heat and radioactivity to a much greater degree than do packing rings of organic materials of the type suitable for use in other industries where the environment is not as harsh to the materials. However, in the nuclear industry, particularly in the case of a pressurized water reactor (PWR) nuclear steam supply system pressure boundary penetration, even graphite packing rings as used in the prior art have presented two significant problems.

The first prior art significant problem has been the fact that the typical reactor pressure boundary penetration, for instance, is designed with an interference fit. This makes the graphite seal very difficult to remove after some time at pressure and temperature. Seal removal is complicated by the tendency of the seal material to delaminate or break up during removal efforts.

An example of where such an interference fit would occur is in a radial seal application in the Combustion Engineering, Inc., System 80® nuclear steam supply system reactor core exit thermocouple nozzle assembly (CETNA). This thermocouple is one of a series in a system known as the "Inadequate Core Cooling Monitoring System" (ICCMS) established for pressurized water nuclear plants in response to requirements imposed by the U.S. Nuclear Regulatory Commission after the Three Mile Island Event. In that example, core exit thermocouples are used to monitor core coolant temperature conditions (superheat) after the start of core uncovery during a loss of coolant accident (LOCA).

In an operating PUR plant, seal changes are typically made during a convenient refueling outage. Thus, pressure, temperature and radiation exposure times for the seal can be as great as eighteen to twenty-four months.

The second prior art significant problem has been the fact that the larger the surface area of the graphite seal, the more pre-load force is required to compress the graphite seal material sufficiently to effectively seal against leakage.

### SUMMARY OF THE INVENTION

The problems of difficult removal and large pre-load requirements due to large seal surface area have been significantly reduced by the novel design of the instant invention. The structure produces an improved inorganic pressure boundary seal between an annular support member surrounding a bore and a cylindrical member having an outside diameter less than the bore diameter and located within the bore. The cylindrical member, typically, has a transverse shoulder, although the shoulder could be on the annular support member or on both members.

The invention includes an annular carrier of suitable metal, such as Inconel, which has a T-shaped cross-section. The cross-section defines a leg portion coaxial with the bore and the cylindrical member and a pair of flanges at one end of the leg are defined by the cross of the "T". The side of the flanges opposite the packing and the leg abut the transverse shoulder. The packing abuts the flange and is preferably in the form of at least four packing rings of graphite stacked with half on each side of the leg.

The packing stack has a force receiving surface opposite the cross and of less than the cross' length radially for receiving force from an annular packing insertion and capture flange member. The flange member is generally annular and is built to rotate and slide into the space between the bore and the cylindrical member as it receives the leg of the carrier in an annular end groove or slot therein of greater depth than the axial distance from the packing, when fully compressed into sealing position, to the end of the leg opposite the cross.

The invention has uses in many different faces or radial seating applications such as valves, pumps and shafts, and it makes no difference if the transverse shoulder and abutting surface of the cross are normal to the bore axis or not.

### BRIEF DESCRIPTION OF THE DRAWING

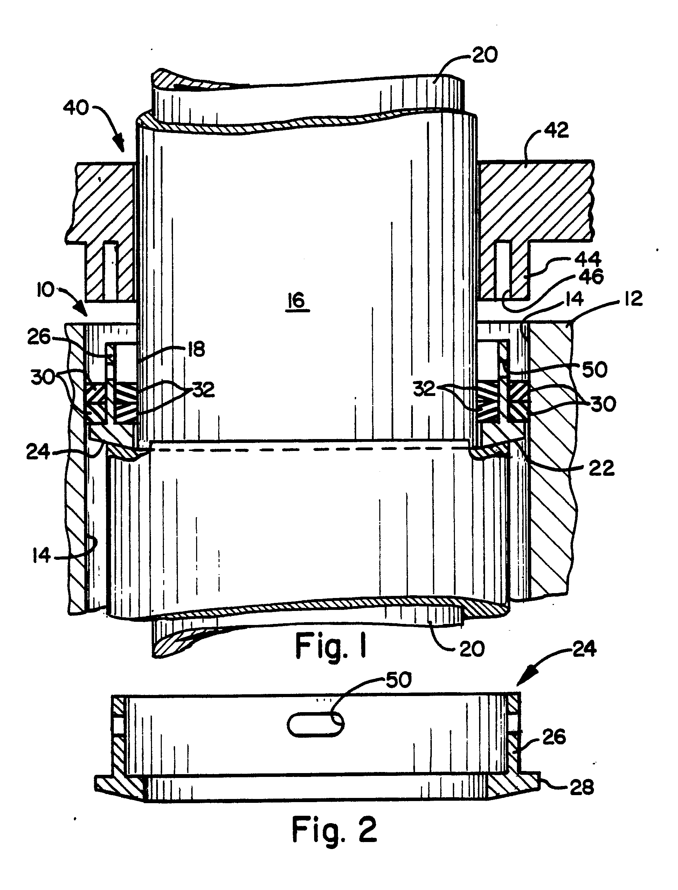

Fig. 1 is a cross-sectional elevational, and somewhat schematic, view of the seal of the invention in a PWR pressure boundary joint between a nozzle having a bore and a cylindrical thermocouple containing column mounted therein, together with a flange member for compressing the graphite in place; and

Fig. 2 is a cross-sectional elevational view of the carrier of the seal of Fig. 1.

## DESCRIPTION OF A PREFERRED EMBODIMENT

The numeral 10 generally designates the seal of the invention. Seal 10 lies within an annular support member in the form of a nozzle or nozzle housing 12 having a bore 14 surrounded thereby.

A generally cylindrical hollow column 16 is coaxially received within the bore 14. The hollow column 16 is called a thermocouple column and it coacts with the nozzle or nozzle housing 12 and the seal 10 of the invention to define the pressurized water reactor pressure boundary in the area of penetration by the thermocouple instrument 20. The thermocouple instrument 20 has a cylindrical body and is shown extending for a short distance beyond either end of the thermocouple column 16 which houses and supports it in a manner not shown but conventional in the nuclear art.

The outer generally cylindrical surface of cylindrical member 16 is, as seen, of an outside diameter less than the diameter of bore 14. This is true on both sides of a transverse shoulder 22 in the generally cylindrical surface. One one side adjacent the opening of the bore, however, the shoulder 22 creates a slightly smaller diameter cylindrical end portion 18 on column 16 which thereby opens up a wider annular gap in bore 14 between the nozzle or nozzle housing 12 and the outer cylindrical surface.

An annular carrier 24 of T-shaped cross-section and of dimension to abut the shoulder 22 in the wider annular gap is provided with a plurality of Grafoil® packing rings 30 on the radial outside of axially extending leg 26 of the "T" formed by the T-shaped cross-section of the annular carrier 24. A plurality of Grafoil® packing rings 32 are on the radial inside of leg 26. Rings 30 create a seal between leg 26 and bore 14 and rings 32 create a seal between leg 26 and the outer cylindrical surface portion 18 when they are compressed against the inside of the cross member 28 of the "T" formed by the T-shaped cross-section of the annular carrier 24.

The assembled parts are given the final compression and sealing or abutting of the rings 30 and 32 against the cross 28, and the abutting of the cross 28 against the shoulder 22 is facilitated, by means of an annular packing insertion and capture flange member 40. The outer force receiving portion 42 of the flange member 40 may take many shapes and is not important. The packing insertion flange member 40 has an annular skirt portion 44 of a dimension built to rotate and slide into the gap between the bore 14 and the portion 18 of cylindrical member 16. The skirt portion 44 has an annular end groove 46 therein of greater depth than the axial distance from the packing rings 30 and 32 when fully compressed into sealing position

to the end of the leg 26 opposite the cross 28.

Leg 26 includes slots 50 for ease of removal of seal 10 by a grappler of any convenient shape. The rings 30 and 32 are easily pulled axially when the carrier 24 is axially pulled along and from the bore 14.

Thus it will be seen that a novel and convenient seal is provided which minimizes the two significant prior art seal problems mentioned above.

## Claims

1. An improved inorganic pressure boundary seal comprising:
an annular support member surrounding a bore;
a cylindrical member having an outside diameter less than the bore diameter and located within the bore;
a transverse shoulder on at least one of said two member;
an annular carrier of a cross-sectional shape having a leg defined thereby coaxial with the bore and the cylindrical member and at least one flange abutting the transverse shoulder; and
an annular packing of inorganic material abutting said flange.

2. The seal of claim 1 in which the inorganic material is graphite.

3. The seal of claim 1 in which the cross-sectional shape is a T-shape.

4. The seal of claim 3 in which there are two flanges which are defined by the cross of the cross-sectional T-shape and each flange is abutted by an annular packing.

5. The seal of claim 4 in which the annular packing of each flange is a graphite ring.

6. The seal of claim 5 in which at least two rings are stacked to abut against each flange.

7. The seal of claim 4 in which the cross of the cross-sectional T-shape has a surface which is transverse but not normal to the leg to abut a shoulder which is not normal to the axis of the bore and the cylindrical member.

8. The seal of claim 1 in which the leg has slots to aid removal of the carrier and packing.

9. The seal of claim 4 in which the packing has a force receiving surface opposite the cross and of less than its length radially for receiving force from an annular packing insertion flange member built to slide into the gap between the bore and the cylindrical member and to receive the leg of the leg of the carrier in an annular end groove therein of greater depth than the axial distance from the packing when fully compressed into sealing position to the end of the leg opposite the cross.

Fig. 1

Fig. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 263 042 (CEFILAC) <br> * Figures; column 6, line 60 - column 7, line 65 * | 1-2,8 | F 16 J 15/18 |
| A | | 5-6 | |
| X | US-A-2 586 871 (SHIELDS) <br> * Figure; column 2, lines 36-40 * | 1,3-4,9 | |
| A | FR-A-2 603 682 (C.N.R.S.) <br> * Figure 1; abstract * | 1,3-4,6 ,9 | |

TECHNICAL FIELDS SEARCHED (Int. Cl.5)

F 16 J

The present search report has been drawn up for all claims

| Place of search | Date of completion of the search | Examiner |
|---|---|---|
| THE HAGUE | 21-02-1990 | NARMINIO A. |